# EUROPÄISCHE PATENTSCHRIFT

(11) **EP 1 332 585 B1**
(45) Veröffentlichungstag und Bekanntmachung des Hinweises auf die Patenterteilung: **09.03.2005**
(21) Anmeldenummer: 00972522.7
(22) Anmeldetag: 09.11.2000
(51) Int. Cl.: H04L 12/28

(54) **VERFAHREN ZUR AGGREGATION UND ZUM ÜBERMITTELN VON MULTIMEDIADATEN**
METHOD FOR GROUPING AND TRANSMITTING MULTIMEDIA DATA
PROCEDE SERVANT A RASSEMBLER ET A TRANSMETTRE DES DONNEES MULTIMEDIA

(43) Veröffentlichungstag der Anmeldung: 06.08.2003
(73) Patentinhaber: Swisscom AG, 3000 Bern 29 (CH)
(72) Erfinder: LEDERMANN, Daniel, CH-3128 Rümligen (CH); BEN YACOUB, Souheil, CH-3050 Bern (CH); HERRMANN, Beat, CH-3006 Bern (CH); SCHLAUSS, Denis, CH-3072 Ostermundigen (CH)
(74) Vertreter: BOVARD AG - Patentanwälte
(86) Internationale Anmeldenummer: PCT/CH2000/000597
(87) Internationale Veröffentlichungsnummer: WO 2002/041579

(56) Entgegenhaltungen:
- EP-A- 0 905 939
- WO-A-98/43177
- US-A- 6 049 831
- MOHAN RAKESH, SMITH JOHN R., LI CHUNG-SHENG: "Content Adaptation Framework: Bringing the Internet to Information Appliances" GLOBAL TELECOMMUNICATIONS CONFERENCE, GLOBECOM 99, [Online] Bd. 4, 5. - 9. Dezember 1999, Seiten 2015-2021, XP002166338 ISBN: 0-7803-5796-5 Gefunden im Internet: <URL:http://www.ieee.org> [gefunden am 2001-05-02]

## Beschreibung

Die vorliegende Erfindung betrifft ein Verfahren zur Aggregation und zum Übermitteln von Multimediadaten, bei welchem Metadaten Multimediadaten zugeordnet werden, ein Benutzerprofil anhand von Benutzerinformationen erstellt wird und Multimediadaten von einer Zentraleinheit an eine Kommunikationsvorrichtung eines Benutzers übermittelt werden. Insbesondere betrifft die vorliegende Erfindung ein Verfahren zur Aggregation und zum Übermitteln von Multimediadaten an unterschiedliche Empfangsvorrichtungen eines Benutzers.

Weltweit werden zur Zeit immer mehr Computer- und Kommunikationssysteme dazu gebraucht, Multimediadaten über Netzwerke, wie z.B. einem LAN (Local Area Network), einem WAN (Wide Area Network) oder dem Internet via z.B. dem öffentlichen, geschalteten Telefonnetzwerk (PSTN: Public Switched Telephone Network) oder einem Mobilfunknetz (PLMN: Public Land Mobile Network) wie z.B. GSM- (Global System for Mobile communication) oder UMTS-Netzen (Universal Mobile Telephone System) etc. zu beziehen oder zu übermitteln. Insbesondere werden dabei Multimediadaten dargestellt und/oder bearbeitet und/oder anderen Computersystemen modifiziert zur Verfügung gestellt. Unter Multimediadaten fallen u.a. digitale Daten wie Texte, Graphiken, Bilder, Animationen, Video, Quicktime und Tonaufnahmen. Dazu gehören auch MPx (MP3) oder MPEGx (MPEG7) Standards, wie sie durch die Moving Picture Experts Group definiert werden. Die bei der Übermittlung von Multimediadaten anfallende Datenmenge ist in den meisten Fällen jedoch enorm. Trotz grosser Anstrengungen von Seiten der Industrie im Ausbau der bestehenden Netze konnte sie bis anhin mit der steigenden Nachfrage nach leistungsfähigeren Netzen und grösseren Übermittlungsbandbreiten kaum Schritt halten. Dazu beigetragen hat in den letzten Jahren die schnell wachsende Popularität von Diensten wie dem Internet, die Forderung nach Multimediadaten "on demand", wie z.B. Videofilme oder Programme/Daten und netzwerkfähige Multiuser-Spiele etc. Höhere Benutzerzahlen und grössere Datenmengen pro Benutzer sind somit die Auslöser, dass die Netze immer wieder an ihre Leistungsgrenzen stossen. Zusätzlich liegen die Kosten für die Benutzung der Netze immer noch zu hoch im Vergleich zum Preis der bezogenen Multimediadaten. Zu den Nachteilen eines Ausbaus der bestehenden Netze gehört, dass der Ausbau zeitaufwendig und verhältnismässig teuer ist. Versuche, die Datenflut über andere Kanäle zu leiten, wie z.B. Broadcastsysteme (z.B. Digital Audio Broadcasting DAB oder Digital Video Broadcasting), bei welchen Broadcastsender digitale Audio- respektive Video-Programme (Fernsehprogramme) und digitale Daten, beispielsweise Daten für die Ausführung von Datendiensten, programmbegleitende Daten (Program Associated Data, PAD) an Broadcastempfänger unidirektional verbreiten, haben sich bis heute nicht wirklich durchsetzen können. Als typisches Beispiel für broadcasting kann die Verbreitung von zugriffskontrollierten Filmen über Broadcastsysteme ausgeführt werden. Die unidirektionale Verbreitungseigenschaft dieser Broadcastsysteme hat u.a. den Nachteil, dass, insbesondere bei der Übertragung mittels Radiowellen, ein Rückkanal von den Broadcastempfängem zu den Broadcastsendern, respektive zu deren Betreibern, fehlt. Bedingt durch diesen fehlenden Rückkanal sind die Möglichkeiten für die Verrechnung von zugriffskontrollierten Programmen und/oder Daten beschränkt (z.B. über Abonnements). Die Verrechnung per Abonnement ist für die Benutzer aber häufig unvorteilhaft, weil die Benutzer nicht spontan zugriffskontrollierte Programme und/oder Daten beziehen können, für die sie kein Abonnement gelöst haben. Ein weiterer Nachteil der Verrechnung per Abonnement liegt darin, dass die Anbieter, respektive die Betreiber der Broadcastsender, keine direkte Information darüber erhalten, welche abonnierten Dienste durch die Benutzer auch tatsächlich bezogen wurden. Aus der Sicht der Benutzer scheint die Verrechnung per Abonnement zudem keine faire Verrechnungsmethode zu sein, da sie für Abonnements unabhängig davon bezahlen müssen, ob sie die abonnierten Dienste beziehen oder nicht. Insbesondere für Betreiber von kleineren Broadcastsendern, respektive für kleinere Anbieter von zugriffskontrollierten Programmen und/oder Daten, ist der Aufwand für die Verwaltung solcher Abonnements und für die Verrechnung solcher Dienste zu aufwendig. Einer der grössten Nachteile ist jedoch, dass für den Anbieter nur sehr ungenaue Daten über das Benutzerverhalten verfügbar sind. Dies macht es dem Anbieter schwierig, schnell auf Benutzerwünsche oder geändertes Benutzerverhalten einzugehen. Zusammenfassend lässt sich sagen, dass genaue statistische und individuelle Daten über das Benutzerverhalten, ein einfaches, billiges Verrechnungssystem über ein preisgünstiges bidirektionales Netz (Interaktivität Benutzer - Multimediaanbieter) wichtig und entscheidend für Muttimediadatenanbieter ist. Diesen Anforderungen genügt der Stand der Technik nicht in der benötigten Weise. Das Dokument Mohan Rakesh, Smith John R. and Li Chung-Sheng: Content Adaptation Framework: Bringing the Internet to Information Appliances', GLOBECOM 99 zeigt ein System, mittels welchem inhaltsangepasste Daten über das Internet an einen Benutzer übermittelt werden können. Damit lässt sich die übertragene Datenmenge auf das benötigte Mass reduzieren. Die Europäische Patentschrift EP 0905939 A2 zeigt ebenfalls ein System zum Reduzieren der zu übertragenden Datenmenge. U.a. können die Daten zu diesem Zweck vom System codiert und komprimiert werden. Die US-Patentschrift US 6049831 offenbart ein System, welches entsprechend dem Endgerät des Benutzers und der benutzten Software des Benutzers die Daten anpasst bzw. ins richtige Format übersetzt. Das System ändert die Bedingungen entsprechend dem Endgerät des Benutzers und erlaubt damit dem Benutzer das Endgerät problemlos zu wechseln. Die internationale Patentpublikation WO 98/43177 des Standes der Technik zeigt ein System, welches dynamisch Daten aus Datenbanken auswählt, extrahiert und spezifisch anpasst, wobei diese Daten an Benutzer des Systems übermittelt werden. Das Verhalten des Benutzers kann dabei erfasst werden und beeinflusst, falls notwendig, das Extraktionsverhalten des Systems.

Es ist eine Aufgabe der vorliegenden Erfindung, ein neues und besseres Verfahren vorzuschlagen, das für die Übermittlung von Multimediadaten geeignet ist. Insbesondere soll die Verrechnung der bezogenen Multimediadaten und die Aufzeichnung des Benutzerverhaltens bei einem akzeptablen Preis/Leistungsverhältnis möglich sein, dem Benutzer das Auffinden und den Bezug von Multimediadaten vereinfachen und das Verfahren sollte die oben angeführten Nachteile des Standes der Technik nicht aufweisen. Eine weitere Aufgabe der Erfindung ist es, für die personalisierte Aggregation von Multimediadaten ein vom System aktives Pushverfahren zu schaffen, ohne dass der Benutzer vorgängig aktiv sein muss.

Gemäss der vorliegenden Erfindung werden diese Ziele insbesondere durch die Elemente des unabhängigen Anspruchs erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass Metadaten Multimediadaten zugeordnet werden, ein Benutzerprofil anhand von Benutzennformationen erstellt wird, Multimediadaten anhand der zugeordneten Metadaten und basierend auf dem Benutzerprofil selektiert werden und Multimediadaten von einer Zentraleinheit an eine Kommunikationsvorrichtung eines Benutzers übermittelt werden, welche Metadaten mindestens teilweise durch automatische Analyse der Multimediadaten basierend auf dem Inhalt der Multimediadaten erzeugt werden, wobei das Benutzerprofil mindestens teilweise dynamisch generiert wird, wobei Teile der Daten des Benutzerprofils vom Benutzer modifizierbar sind, wobei das Benutzerprofil in der Zentraleinheit permanent einem Benutzer zugeordnet abgespeichert ist, und wobei aus den selektierten Multimediadaten mittels eines Repackagingmoduls unter Berücksichtigung der Daten des Benutzerprofils contentorientierte und benutzerspezifisch optimierte Multimediadaten erzeugt werden, welche contentorientierten und benutzerspezifisch optimierten Multimediadaten dem Benutzer in einem permanenten Datenspeicher eines Contentmoduls der Zentraleinheit abgespeichert zur Verfügung gestellt werden und welche contentorientierten und benutzerspezifisch optimierten Multimediadaten durch den Benutzer modifizierbar sind. Der Vorteil dieser Erfindung liegt insbesondere darin, dass eine Optimierung der Übertragung von Muttimediadaten erreicht wird, ohne dass die bestehenden Netze ausgebaut werden müssen. Dies hat den Vorteil, dass die Erfindung kostengünstiger und schneller eine Verbesserung bringt, ohne dass der Benutzer bezüglich der Qualität oder Quantität der übermittelten Informationen eine Einschränkung erfahren würde. Ein anderer Vorteil ist, dass dem Benutzer das zeitaufwendige Suchen und zusammenstellen von Daten, insbesondere Multimediadaten, in grossen Netzwerken stark erleichtert wird und er zudem eine dynamische vom System erstellte Vorselektion oder Zusammenstellung (d.h. er erhält z.B. vom System aktiv Vorschläge zu möglichen Such-Aktionen) und eine von ihm direkt beeinflussbare Automation bei der Suche erhalten kann.

In einer Ausführungsvariante werden die Metadaten mindestens teilweise dynamisch generiert werden, wobei die dynamische Generierung mindestens teilweise basierend auf Benutzerdaten des Benutzerprofils erfolgt. Einer der Vorteile dieser Ausführungsvariante liegt darin, dass die Metadaten fortwährend die für den Benutzer notwendige Aktualität aufweisen. Dies wird zudem ohne unnötigen Verschleiss von Systemresourcen erreicht.

In einer Ausführungsvariante bestimmt der Benutzer contentorientierte und benutzerspezifisch optimierte Multimediadaten und/oder Verweise auf Multimediadaten, welche contentorientierten und benutzerspezifisch optimierten Multimediadaten und/oder Verweise auf Multimediadaten (wie z.B. Hyperlinks) in der Datenbank des Contentmoduls dem Benutzer zugeordnet abgespeichert zur Verfügung gestellt werden. Die Ausführungsvariante hat u.a. den Vorteil, dass einmal generierte Multimediadaten bei mehrfachem Gebrauch durch den Benutzer nicht jedesmal neu erzeugt werden müssen. Dies erlaubt einen schnelleren Zugriff auf die gewünschten Daten unter Einsparung von Rechenleistung. Insbesondere wird das Suchen nach Multimediadaten anhand der generierten Metadaten anhand der benutzerspezifisch definierten Verweise auf Multimediadaten erweitert.

In einer Ausführungsvariante verwaltet der Benutzer die im dem Benutzer zugeordneten Datenspeicher des Contentmoduls abgespeicherten Daten mindestens teilweise selber. Unter Verwalten ist z.B. neben dem direkten Zugriff das Löschen oder Verändern von Speicherparameter gemeint. Dies hat u.a. den Vorteil, dass der Benutzer das Speichern der Daten im Contentmodul direkt mitbeeinflussen kann.

In einer Ausführungsvariante werden im Benutzerprofil benutzerspezifische Daten zu Netzwerkeigenschaften und/oder Daten zu Hardwareeigenschaften der Kommunikationsvorrichtung des Benutzers und/oder Daten zum Benutzerverhalten abgespeichert. Diese Ausführungsvariante hat die gleichen Vorteile wie die erste Ausführungsvariante.

In einer weiteren Ausführungsvariante optimiert das Repackagingmodul die selektierten Multimediadaten unter Berücksichtigung der Benutzerdaten benutzerspezifisch derart, dass sie an die Anforderungen der Kommunikationsvorrichtung des Benutzers und/oder die Kommunikationsverbindung von der Zentraleinheit zu der genannten Kommunikationsvorrichtung angepasst sind. Diese Ausführungsvariante hat ebenfalls die gleichen Vorteile wie die erste Ausführungsvariante.

In einer Ausführungsvariante werden im Contentmodul der Zentraleinheit dem Benutzer contentorientierte und für unterschiedliche Kommunikationsvorrichtungen des Benutzers benutzerspezifisch optimierte Multimediadaten abgespeichert zur Verfügung gestellt. Insbesondere ist dies sinnvoll für Ausführungsvarianten, wo der Benutzer mehrere Benutzerprofile für verschiedene Kommunikationsvorrichtungen definieren kann. Ein Vorteil dieser Ausführungsvariante ist, dass der Benutzer damit mehrere ganz unterschiedliche Kommunikationsgeräte zentral verwalten kann. Somit kann er z.B. über eine komfortable Schnittstelle eines Computersystems in der Zentraleinheit die bereitzustellenden Multimediadaten einer für eine andere Kommunikationsvorrichtung wie einem WAP- und/oder SMS-fähigen Mobilfunkgerät bestimmen und verwalten.

In einer weiteren Ausführungsvariante umfasst das Benutzerprofil Zugriffsbedingungsdaten, welche einen vom Benutzer und/oder der Zentraleinheit definierbaren Geldbetragswert einer Kreditlimite festlegt, bis zu welcher Kreditlimite ein automatisches Billing der bezogenen, contentorientierten und benutzerspezifisch optimierte Multimediadaten stattfindet. Dies hat u.a. den Vorteil, dass bei der Vergütung für den Zugriff auf contentorientierte und benutzerspezifisch optimierte Multimediadaten der Benutzer oder die Zentraleinheit frei festlegen kann, welche Art von Verrechnung bis zu welchen Beträgen erfolgen soll.

In einer weiteren Ausführungsvariante erfasst die Zentraleinheit automatisch und/oder dynamisch Daten zum Benutzerverhalten und speichert sie dem Benutzerprofil zugeordnet ab. Dies hat z.B. den Vorteil, dass statistische Erhebungen über Benutzerverhalten zentral ausgeführt werden können und Multimediadatenanbieter schnell auf verändertes Benutzerverhalten reagieren können.

In einer Ausführungsvariante umfasst das Benutzerprofil vom Benutzer und/oder der Zentraleinheit festlegbare Weiterverwendungsbedingungsdaten, basierend auf welchen Weiterverwendungsbedingungsdaten die Zentraleinheit das Benutzerprofil auswertet und Dritten zugänglich macht. Diese Ausführungsvariante hat z.B. den Vorteil, dass der Benutzer festlegen kann, bis zu welcher Stufe Daten über sein Benutzerverhalten oder sein Benutzerprofil Dritten zugänglich gemacht werden darf oder für statistische Erhebungen verwendet werden darf. Zum Beispiel kann so der Anbieter ein Bonussystem für solche Benutzer einführen, welche mehr Informationen über ihr Benutzerverhalten weiterverwenden lassen. Der Anbieter kann zudem flexibel auf das Kundenverhalten und Kundenwünsche eingehen.

In einer Ausführungsvariante bestimmt der Benutzer vorgängig zu einem Bezug von contentorientierten und benutzerspezifisch optimierten Multimediadaten Zugriffsrequestdaten der Benutzerdaten, welche Zugriffsrequestdaten eine Identifizierung der gewünschten Multimediadaten und/oder benutzerspezifische Angaben zur Übertragung der gewünschten Multimediadaten umfassen. Dies hat u.a. den gleichen Vorteil wie weiter oben, dass nämlich der Benutzer einen schnelleren und effizienteren Zugriff auf gewünschte Daten (insbesondere zugriffskontrollierte Daten) für unterschiedliche Kommunikationsvorrichtungen erhält.

In einer weiteren Ausführungsvariante umfassen die Multimediadaten Programme (Software) und/oder programmbegleitende Daten. Diese Ausführungsvariante hat z.B. den Vorteil, dass den contentorientierten und benutzerspezifisch optimierten Multimediadaten angepasste Verarbeitungs-, Darstellungsprogramme oder -software, Spiele etc. vorgängig auf die Kommunikationsvorrichtung des Benutzers von der Zentraleinheit heruntergeladen werden können.

In einer weiteren Ausführungsvariante umfassen die Multimediadaten Hyperlinks.

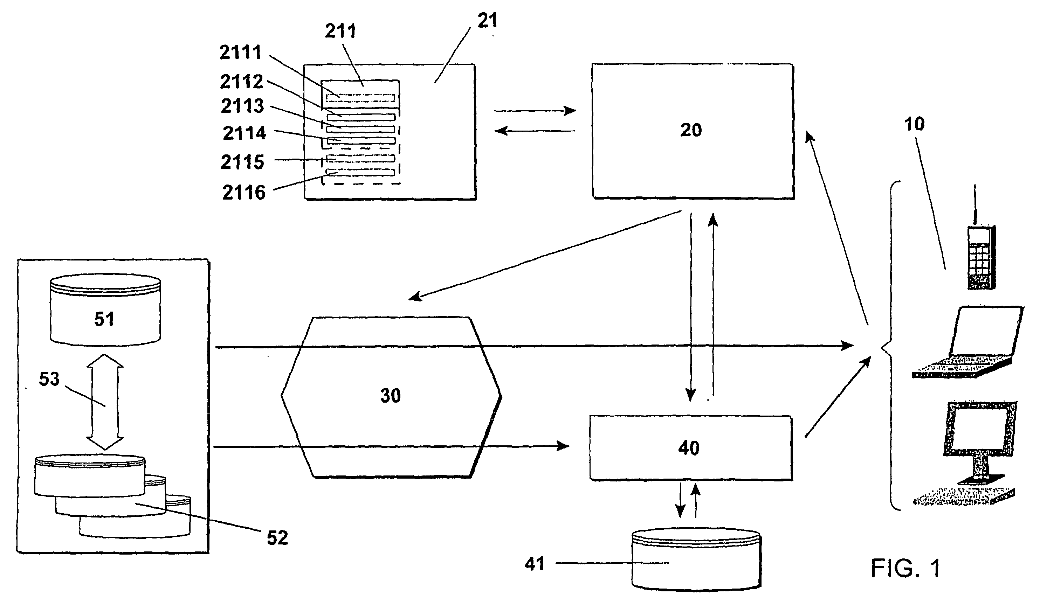

Nachfolgend wird eine Ausführung der vorliegenden Erfindung anhand eines Beispiels beschrieben. Das Beispiel wird durch die beigelegte Figur 1 illustriert, die ein schematisches Blockdiagramm des Verfahrens zeigt, in welchem Multimediadaten durch eine Zentraleinheit personifiziert und benutzerspezifisch optimiert werden.

In der Figur 1 zeigt ein Ausführungsbeispiel gemäss der vorliegenden Erfindung, in welchem Ausführungsbeispiel zur Aggregation und zum Übermitteln von Multimediadaten mittels einer Zentraleinheit 20 an eine Kommunikationseinheit 10 eines Benutzers Multimediadaten 52 bezüglich ihres Inhaltes analysiert und Metadaten 51 basierend auf dem Inhalt der Multimediadaten 52 durch ein Metadatenextraktionsmodul 53 generiert bzw. personifiziert aggregiert werden. Gemäss der vorliegenden Erfindung ist die Empfangsvorrichtung 10 mit einer Zentraleinheit 20 über ein Kommunikationsnetz bidirektional verbunden. Das Kommunikationsnetz umfasst beispielsweise ein GSM- oder ein UMTS-Netz, oder ein satellitenbasiertes Mobilfunknetz, und/oder ein oder mehrere Festnetze, beispielsweise das öffentlich geschaltete Telefonnetz, das weltweite Internet oder ein geeignetes LAN (Local Area Network) oder WAN (Wide Area Network). Insbesondere umfasst es auch ISDN- und XDSL-Verbindungen. Unter Multimediadaten sind u.a. digitale Daten wie Texte, Graphiken, Bilder, Karten, Animationen, bewegte Bilder, Video, Quicktime, Tonaufnahmen, Programme (Software), programmbegleitende Daten und Hyperlinks oder Verweise auf Multimediadaten zu verstehen. Dazu gehören z.B. auch MPx (MP3) oder MPEGx (MPEG4 oder 7) Standards, wie sie durch die Moving Picture Experts Group definiert werden. Die Multimediadaten 52 können an unterschiedlichen Orten in unterschiedlichen Netzen oder lokal für die Zentraleinheit 20 zugreifbar abgespeichert sein. Die letztgenannten Netzwerke können z.B. ein LAN (Local Area Network) oder ein WAN (Wide Area Network), das Internet, Broadcastkabelnetze, PSTN, PLMN o.ä. umfassen. Die Metadaten 52 werden anhand einer inhaltsbasierenden Indexingtechnik extrahiert und können Stichworte, Synonyme, Verweise auf Multimediadaten (z.B. auch Hyperlinks), Bild- und/oder Tonsequenzen etc. umfassen. Solche Systeme sind im Stand der Technik in unterschiedlichsten Variationen bekannt. Beispiele dafür sind die US-Patentschrift US 5 414 644, welche eine Drei-File-Indexingtechnik beschreibt oder die US-Patentschrift US 5 210 868, welche bei dem Indexieren der Multimediadaten und Extrahieren der Metadaten zusätzlich auch Synonyme als Such-Keywords abspeichert. Im vorliegenden Ausführungsbeispiel können die Metadaten aber auch mindestens teilweise dynamisch (in Real-Time) basierend auf Benutzerdaten eines Benutzerprofils 21 erzeugt werden. Dies hat z.B. den Vorteil, dass die Metadaten immer die für den Benutzer sinnvolle Aktualität und Genauigkeit besitzen. Vom Benutzerverhalten an der Kommunikationsvorrichtung 10 zum Metadatenextraktionsmodul existiert also eine Art Feedbackmöglichkeit, die die Extraktion direkt beeinflussen kann. Es können aber auch insbesondere bei der Suche bestimmter Daten sog. Agents eingesetzt werden. Das genannte Benutzerprofil 21 wird anhand von Benutzerinformationen erstellt und in der Zentraleinheit 20 dem Benutzer zugeordnet abgespeichert. Die Zentraleinheit 20 generiert gemäss dem Benutzerprofil 21 contentorientierte und benutzerspezifisch optimierte Multimediadaten 52 und übermittelt sie an die Kommunikationsvorrichtung 10 eines Benutzers. Das Benutzerprofil 21 bleibt permanent einem bestimmten Benutzer zugeordnet abgespeichert. Die Kommunikationsvorrichtung 10 des Benutzers kann beispielsweise ein PC (Personal Computer), TV, PDA (Personal Digital Assistant) oder ein Mobilfunkgerät sein (insbesondere z.B. in Kombination mit einem Broadcastempfänger). Das Benutzerprofil 21 kann Informationen über einen Benutzer wie z.B. Ort der Kommunikationseinheit 10 des Benutzers im Netzwerk, Identität des Benutzers, benutzerspezifische Netzwerkeigenschaften 2113, benutzerspezifische Hardwareeigenschaften 2114, Daten zum Benutzerverhalten 2112 etc. umfassen. Der Benutzer legt vorgängig zu einem Bezug von Multimediadaten 52 mindestens Teile von Benutzerdaten 211 des Benutzerprofils 21 fest und/oder modifiziert sie. Natürlich hat er ebenso die Möglichkeit, Multimediadaten 52 durch direkten Zugriff, also ohne Such- und Zusammenstellhilfe der Zentraleinheit im Netz zu suchen und auf sie zuzugreifen. Die übrigen Daten des Benutzerprofils 21 können automatisch durch die Zentraleinheit 20, durch autorisierte Dritte oder ebenfalls vom Benutzer bestimmt sein. So kann die Zentraleinheit 20 z.B. automatische Anschlusserkennung, Benutzeridentifizierung und/oder automatisches Aufzeichnen und Auswerten des Benutzerverhaltens (Zeit des Zugriffs, Häufigkeit des Zugriffs etc.) umfassen. Diese Daten zum Benutzerverhalten können in einer Ausführungsvariante dann wiederum vom Benutzer entsprechend seinen Wünschen modifizierbar sein. Die Multimediadaten 52 werden von der Zentraleinheit 20 anhand der zugeordneten Metadaten 51 und basierend auf dem Benutzerprofil 21 selektiert. Von diesen genannten selektierten Multimediadaten 52 werden anschliessend mittels eines Repackagingmoduls 30 unter Berücksichtigung des Benutzerprofils 21 und im speziellen der Benutzerdaten 211 contentorientierte und benutzerspezifisch optimierte Multimediadaten erzeugt. Zum Beispiel ist ein Benutzer an Börsendaten (oder an einzelnen Teilinformationen der Börsendaten) interessiert, werden die gewünschten Daten aus den im Netz gefundenen allgemeinen Daten extrahiert, zusammengestellt, entsprechend dem Benutzerprofil 21 z.B. den benutzerspezifischen Hardwareeigenschaften 2114 oder den Netzwerkeigenschaften 2113 optimiert (z.B. komprimiert, sequenziert, Bildauflösung oder Tonqualität reduziert etc.). in einer Ausführungsvariante hat der Benutzer die Möglichkeit, Zugriffsrequestdaten 2111 vor dem Bezug der Multimediadaten 52 im Benutzerprofil 21 festzulegen. Die Zugriffsrequestdaten 2111 können z.B. Zeit, Datum, Art, Bezeichnung, allgemeine Beschreibungen (z.B. auch Synonyme) und/oder Eigenschaften wie Auflösung etc. der gewünschten Multimediadaten umfassen. So sind zum Zeitpunkt des Zugriffs durch den Benutzer die benutzerspezifisch optimierten und contentorientierten Multimediadaten bereits bereitgestellt. Dadurch, dass die Daten des Benutzerprofils z.B. bezüglich Bildauflösung etc. nicht nur von der Zentraleinheit 20 bestimmt werden, sondern vom Benutzer mindestens teilweise modifiziert werden können (z.B. Zugriffsrequestdaten 2111), kann bei der Optimierung auch auf spezielle Benutzerwünsche (z.B. bezüglich Downloadzeiten) eingegangen werden. Unter Personifizieren von Multimediadaten ist der oben genannte Prozess der Auswahl von Multimediadaten und Sequenzen von Multimediadaten gemäss dem Benutzerprofil 21 oder gemäss direkten Angaben des Benutzers gemeint. Es umfasst insbesondere eine content-bezogene Zusammenstellung von Daten. Unter benutzerspezifischem Optimieren der Multimediadaten ist das Optimieren auf z.B. benutzerspezifische Netzwerk- und/oder Hardwareeigenschaften und/oder Benutzerverhalten gemäss dem Benutzerprofil 21 gemeint. In einer Ausführungsmöglichkeit umfasst das Benutzerprofil 21 eine Kreditlimite 2115. Die Kreditlimite 2115 ist ein vom Benutzer und/oder der Zentraleinheit 20 und/oder autorisierten Dritten (z.B. Banken, Kreditkartengesellschaften, Multimediadatenanbieter etc.) definierbarem Geldbetragswert und legt einen maximalen Geldbetragswert für den Bezug von kostenpflichtigen, contentorientierten und benutzerspezifisch optimierten Multimediadaten fest, bis zu welchem Geldbetragswert von der Zentraleinheit 20 ein automatisches Billing für den Bezug von Multimediadaten vorgenommen werden kann. Bei Überschreiten der Kreditlimite 2115 wird von der Zentraleinheit 20 beispielsweise eine Rückfrage an ein Bankinstitut bezüglich der Kreditwürdigkeit des Benutzers vorgenommen. Die Kreditlimite 2115 kann auch dem Benutzer dazu dienen, ihn vor unvorhergesehenen Kosten für den Bezug der Multimediadaten zu schützen. Insbesondere kann der Benutzer über die Zentraleinheit 20 durch das Billing auch auf kostenpflichtige zugriffskontrollierte Multimediadaten (Conditional Access) von Drittanbietern zugreifen. Das Handling und Verwalten der Verrechnung (Billing) und/oder der Zugriffsschlüssel werden von der Zentraleinheit 20 ausgeführt. Das Dekodieren und/oder Entschlüsseln der zugriffskontrollierten Multimediadaten wird mittels eines Zugriffskontrollmodul des Repackagingmodul 30 erreicht, wobei z.B. Distribution Key und/oder Session Key (Schlüssel) nach dem ETSI-Standard verwendet werden können. Das Repackagingmodul 30 kann gemäss der Erfindung hardwaremässig oder softwaremässig ausgeführt sein. Für das Billing der bezogenen Multimediadaten, d.h. der Verrechnung des Bezugs der Daten, werden entsprechende Verrechnungsdaten von der Zentraleinheit 20 generiert, die z.B. Verrechnungsbelege (z.B. elektronisch signiert) umfassen, ähnlich wie CDR-Belege (Call Data Records) bei sogenannten DUR-Belegen (DAB/DVB Usage Records). Die Verrechnungsbelege werden von der Zentraleinheit 20 z.B. an ein Clearingmodul einer Kreditkartengesellschaft übermittelt, wo sie weiter bearbeitet werden, oder die Zentraleinheit führt die Verrechnung eigenständig durch. Mittels des Repackagingmoduls 30 können die contentorientierten und benutzerspezifisch optimierten Multimediadaten auch mit einem elektronischen Stempel, einer elektronische Signatur oder einem elektronischen Wasserzeichen versehen werden. Die elektronische Signatur erlaubt es, die contentorientierten und benutzerspezifisch optimierten Multimediadaten zu einem beliebigen späteren Zeitpunkt dem Benutzer zuzuordnen, weicher sie von der Zentraleinheit bezogen hat. Damit kann der Missbrauch von kostenpflichtigen Multimediadaten durch den Benutzer verhindert werden. Das Benutzerprofil 21 kann insbesondere auch Weiterverwendungsbedingungsdaten 2116 umfassen, welche vom Benutzer und/oder der Zentraleinheit 20 und/oder autorisierten Dritten (wie z.B. den Anbietern von Multimediadaten 52) festlegbar sind. Basierend auf den Weiterverwendungsbedingungsdaten 2116 werden die Daten des Benutzerprofils 21 ausgewertet und Dritten (welche ebenfalls vom Benutzer oder der Zentraleinheit 20 festlegbar sein können) zugänglich gemacht. Der Datenschutz ist dadurch durch den Benutzer bestimmbar. Die Auswertung kann allgemein statistisch aber auch ganz individuell auf den spezifischen Benutzer bezogen sein. Die Zentraleinheit 20 wirkt dabei als unabhängige Filterstation der Daten gemäss den Weiterverwendungsbedingungsdaten 2116. Die Weiterverwendungsbedingungsdaten 2116 in Kombination mit dem Billing erlauben es insbesondere, Bonussysteme basierend auf den Weiterverwendungsbedingungsdaten 2116 mittels der Zentraleinheit 21 einzusetzen. So können z.B. die Bezugsgebühren für kostenpflichtige Multimediadaten vom Anbieter gesenkt werden, wenn der Benutzer die Weiterverwendungsbedingungsdaten 2116 so setzt, dass der Anbieter mehr über das spezifische Benutzerverhalten erfahren kann. Dies gibt dem Anbieter viele Vorteile. So kann er z.B. schneller auf geändertes spezifisches Benutzerverhalten aber auch allgemeine Trends eingehen und sie berücksichtigen. Eine andere Anwendung solcher statistischer Auswertungen der vorliegenden Erfindung ist die Möglichkeit für das System, anhand der genannten Auswertungen Gemeinschaften oder Gruppen von Benutzern mit gleichen oder ähnlichen Interessen zu bilden. Dies erlaubt beispielsweise eine optimierte und vielleicht zeit- und kostenintensivere Aggregation von Multimediadaten durch das System. In umgekehrter Art kann, falls das System statistisch merkt, dass von z.B. von verschiedenen Benutzem mehrfach Objekte gesucht und/oder angefordert wurden, welche nicht gefunden werden konnten. Falls Multimediadaten mit dem gewünschten Inhalt nicht existierten, kann daraus geschlossen werden, dass offensichtlich ein neues Interesse oder eine Nachfrage nach Multimediadaten mit bisher noch nicht angebotenem Inhalt existiert oder am entstehen ist. Das lässt die Contentprovider rasch auf neue Interessen reagieren und sich dort eine Marktposition erschaffen. Die contentorientierten und benutzerspezifisch optimierten Multimediadaten werden dem Benutzer in einer Datenbank 41 eines Contentmoduls 40 der Zentraleinheit 20 abgespeichert zur Verfügung gestellt. In dieser Datenbank 41 kann nicht nur die Zentraleinheit 20 anhand des Benutzerprofils 21 contentorientierte und benutzerspezifisch optimierte Multimediadaten und oder Verweise auf contentorientierte und benutzerspezifisch optimierte Multimediadaten abspeichern, sondern es lassen sich auch vom Benutzer contentorientierte und benutzerspezifisch optimierte Multimediadaten und/oder Verweise auf contentorientierten und benutzerspezifisch optimierten Multimediadaten in der Datenbank 41 abspeichem. Somit erhält der Benutzer indirekt z.B. über die Zugriffsrequestdaten 2111 Einfluss auf die in der Datenbank 41 bereitgestellten Daten, und direkt, indem er die genannten Daten bestimmt (z.B. für Multimediadaten, welche er zu einem späteren Zeitpunkt zu gebrauchen gedenkt). Dies erlaubt dem Benutzer, seine Zugriffszeit weiter zu optimieren. Der Benutzer kann jederzeit auf die contentorientierten und benutzerspezifisch optimierten Multimediadaten der Datenbank 41 des Contentmoduls 40 mit der Kommunikationsvorrichtung 10 zugreifen oder die Zentraleinheit 20 führt den Download der Daten auf die Kommunikationsvorrichtung 10 zu einem vorbestimmten Zeitpunkt durch. Das Bestimmen der bereitzustellenden contentorientierten und benutzerspezifisch optimierten Multimediadaten kann je nach Benutzeroberfläche z.B. mit Drag-and-Drop oder anderen Auswahlmechanismen geschehen. Es kann sinnvoll sein im System eine Alarmfunktion zu integrieren, die den Benutzer mit einem Alert darauf aufmerksam macht, dass anhand des Profils wichtige Multimediadaten bereitzustellen gewesen wären, aber wegen z.B. der Wahl des Endgerätes bzw. der Kommunikatoinsvorrichtung 10 diese Daten vom System nicht gepushed werden können oder konnten (d.h. dass z.B. die vom System als wichtig erachteten Multimediadaten den technischen Gegebenheiten der Kommunikationsvorrichtung 10 nicht entsprechen). Als zusätzlicher Dienst ist kann auch angeboten werden, dass auf Verlangen des Benutzers der Inhalt oder spezifische (z.B. vom Benutzer bestimmbare) Teile des Inhalts der Datenbank 41 des Contentmoduls 40 auf einem physikalischen Medium, wie z.B. CD-Rom oder DVD, gespeichert werden und dem Benutzer, z.B. via Post, zugestellt werden.

Es ist wichtig darauf hinzuweisen, dass der Benutzer gemäss der vorliegenden Erfindung die Möglichkeit hat, mehrere verschiedene Benutzerprofile 21 für verschiedene Kommunikationsvorrichtungen 10 und/oder verschiedene Netzwerkstandorte etc. für sich bei der Zentraleinheit 20 zu definieren. So kann er z.B. ein Benutzerprofil 21 für ein Mobilfunkgerät, ein Benutzerprofil 21 für einen PC und eines für einen PDA definieren. Da die verschiedenen Benutzerprofile 21 jeweils dem gleichen Benutzer zugeordnet sind, kann er die Benutzerprofile 21 auch von seinen verschiedenen Kommunikationsvorrichtungen 10 gemeinsam modifizieren und verwalten. So kann er z.B. während des Tages bei der Arbeit an seinem PC Zugriffsrequestdaten 2111 festlegen, um später auf dem Heimweg auf die Multimediadaten (Börse, Wetter, Sport etc.) entsprechend den vordefinierten Zugriffsrequestdaten 2111 mit seinem Mobilfunkgerät zuzugreifen. Die Zentraleinheit 20 wirkt dabei als zentrales Verwaltungselement, welches dem Benutzer erlaubt, seine verschiedenen Endgeräte und die gewünschten Multimediadaten in sinnvoller Art zu verwalten. Durch diesen wechselseitigen Zugriff wird eine weit möglichste Optimierung bei minimalster Netzbelastung und grösstem Benutzerkomfort erreicht. Da der Benutzer ein permanentes Benutzerprofil 21 in der Zentraleinheit 20 zugeordnet abgespeichert erhält, hat die Zentraleinheit 20 auch die Möglichkeit, Belastungsspitzen bei der Rechenleistung und/oder Netzübertragung (Zeit, Übertragungskanal etc.) zu berücksichtigen. Auf der Gegenseite ist es wichtig zu sehen, dass mit der vorliegenden Erfindung vom System für den Benutzer eine vom System her aktive Push-Situation geschaffen wird, ohne dass der Benutzer selbst aktiv werden müsste, d.h. die Daten werden vom System ohne weiteres Zutun des Benutzers anhand seines Benutzerprofils bereitsgestellt und falls nvorgesehen selbständig übertragen. Dies kann bei automatischer Geräteerkennung z.B. auch das zeitliche Benutzungsverhalten von verschiedenen Kommunikationsvorrichtungen (Endgeräten) vom gleichen Benutzer berücksichtigen etc.. Es ist auch vorstellbar, dass das System für die personifizierte Erstellung von Multimedia-Reklame Daten benutzt wird oder zum integrieren solcher in vom Benutzer angeforderte Multimediadaten. Es muss jedoch darauf hingewiesen werden, dass das Verfahren durch die hier erwähnten Beispiele in seinem Schutzumfang in keiner Weise als eingeschränkt betrachtet werden darf.

### Liste der Bezugszeichen

- 10: Kommunikationsvorrichtung
- 20: Zentraleinheit
- 21: Benutzerprofil
211 Vom Benutzer bestimmbare Daten
2111 Zugriffsrequestdaten
2112 Daten basierend auf dem Benutzerverhalten
2113 Benutzerspezifische Daten zu Netzwerkeigenschaften
2114 Benutzerspezifische Daten zu Hardwareeigenschaften
2115 Kreditlimite
2116 Weiterverwendungsbedingungsdaten
- 30: Repackagingmodul
- 40: Contentmodul
- 41: Datenbank
- 51: Metadaten
- 52: Multimediadaten
- 53: Metadatenextraktionsmodul

## Patentansprüche

1. Verfahren zur Aggregation und zum Übermitteln von Muttimediadaten, bei welchem Metadaten (51) Multimediadaten (52) zugeordnet werden, ein Benutzerprofil (21) anhand von Benutzerinformationen erstellt wird, Multimediadaten (52) anhand der zugeordneten Metadaten (51) und basierend auf dem Benutzerprofil selektiert werden und Multimediadaten von einer Zentraleinheit (20) an eine Kommunikationsvorrichtung (10) eines Benutzers übermittelt werden, wobei die Metadaten (51) mindestens teilweise, durch automatische Analyse der Multimediadaten (52) basierend auf dem Inhalt der Multimediadaten (52) erzeugt werden,
das Benutzerprofil (21) mindestens teilweise dynamisch generiert wird, wobei Teile der Daten des Benutzerprofils (21) vom Benutzer modifizierbar sind und wobei das Benutzerprofil in der Zentraleinheit (20) permanent einem Benutzer zugeordnet abgespeichert ist, und
aus den selektierten Multimediadaten (52) mittels eines Repackagingmoduls (30) unter Berücksichtigung der Daten des Benutzerprofils (21) contentorientierte und benutzerspezifisch optimierte Multimediadaten erzeugt werden, **dadurch gekennzeichnet, dass** contentorientierte und benutzerspezifisch optimierte Multimediadaten dem Benutzer in einem permanenten Datenspeicher (41 ) eines Contentmoduls (40) der Zentraleinheit (20) abgespeichert zur Verfügung gestellt werden und dass contentorientierte und benutzerspezifisch optimierte/Multimediadaten durch den Benutzer modifizierbar sind.

2. Verfahren nach Anspruch 1, **dadurch gekennzeichnet, dass** die Metadaten (51) mindestens teilweise dynamisch generiert werden, wobei die dynamische Generierung mindestens teilweise basierend auf Benutzerdaten (211) des Benutzerprofils (21) erfolgt.

3. Verfahren nach einem der Ansprüche 1 oder 2, **dadurch gekennzeichnet, dass** der Benutzer die im dem Benutzer zugeordneten Datenspeicher (41) des Contentmoduls (40) abgespeicherten Daten mindestens teilweise selber verwaltet.

4. Verfahren nach einem der Ansprüche 1 bis 3, **dadurch gekennzeichnet, dass** im Benutzerprofil (21) benutzerspezifische Daten zu Netzwerkeigenschaften (2113) und/oder Daten zu Hardwareeigenschaften (2114) der Kommunikationsvorrichtung (10) des Benutzers und/oder Daten zum Benutzerverhalten (2112) abgespeichert werden.

5. Verfahren nach einem der Ansprüche 1 bis 4, **dadurch gekennzeichnet, dass** dem Benutzer und dem Datenspeicher (41) des Benutzers verschiedene Benutzerprofile (21) für verschiedene Kommunikationsvorrichtungen (10) des Benutzers zugeordnet abgespeichert sind, wobei die Daten der Benutzerprofile vom Benutzer mindestens teilweise selber bestimmbar sind.

6. Verfahren nach einem der Ansprüche 1 bis 5, **dadurch gekennzeichnet, dass** das Repackagingmodul (30) die selektierten Multimediadaten unter Berücksichtigung der Benutzerdaten (211) benutzerspezifisch derart optimiert, dass sie an die Anforderungen der Kommunikationsvorrichtung (10) des Benutzers und/oder die Kommunikationsverbindung von der Zentraleinheit (20) zu der genannten Kommunikationsvorrichtung angepasst sind.

7. Verfahren nach einem der Ansprüche 1 bis 6, **dadurch gekennzeichnet, dass** das Benutzerprofil (21) Zugriffsbedingungsdaten umfasst, welche einen vom Benutzer und/oder der Zentraleinheit (20) definierbaren Geldbetragswert einer Kreditlimite (2115) festlegen, bis zu welcher Kreditlimite (2115) ein automatisches Billing der bezogenen, contentorientierten und benutzerspezifisch optimierten Multimediadaten stattfindet.

8. Verfahren nach einem der Ansprüche 1 bis 7, **dadurch gekennzeichnet, dass** Daten zum Benutzerverhalten (2112) von der Zentraleinheit (20) automatisch erfasst und dem Benutzerprofil (21) zugeordnet abgespeichert werden.

9. Verfahren nach einem der Ansprüche 1 bis 8, **dadurch gekennzeichnet, dass** das Benutzerprofil (21) vom Benutzer und/oder der Zentraleinheit (20) festlegbare Weiterverwendungsbedingungsdaten (2116) umfasst, basierend auf welchen Weiterverwendungsbedingungsdaten (2116) die Zentraleinheit (20) das Benutzerprofil (21) auswertet und Dritten zugänglich macht.

10. Verfahren nach einem der Ansprüche 1 bis 9, **dadurch gekennzeichnet, dass** der Benutzer vorgängig zu einem Bezug von contentorientierten und benutzerspezifisch optimierten Multimediadaten Zugriffsrequestdaten (2111) der Benutzerdaten (211) bestimmt, welche Zugriffsrequestdaten (2111) eine Identifizierung der gewünschten Multimediadaten (52) und/oder benutzerspezifische Angaben zur Übertragung der gewünschten Multimediadaten (52) umfassen.

## Claims

1. Method for the aggregation and the transmission of multimedia data, in which metadata (51) are assigned to multimedia data (52), a user profile (21) is established based on user information, multimedia data (52) are selected based on the assigned metadata (51) and based on the user profile, and multimedia data are transmitted from a central unit (20) to a communication device (10) of a user, the metadata (51) being generated at least in part through automatic analysis of the multimedia data (52) on the basis of the content of the multimedia data (52),
the user profile (21) being generated dynamically at least in part, parts of the data of the user profile (21) being modifiable by the user and the user profile being stored in the central unit (20) permanently assigned to a user, and
content-oriented and user-specific optimised multimedia data being generated from the selected multimedia data (52) by means of a repackaging module (30) taking into consideration the data of the user profile (21), **characterised in that** content-oriented and user-specific optimised multimedia data are made available to the user stored in a permanent data store (41) of a content module (40) of the central unit (20), and **in that** content-oriented and user-specific optimised multimedia data are modifiable by the user.

2. Method according to claim 1, **characterised in that** the metadata (51) are generated dynamically at least in part, the dynamic generation taking place at least in part based on user data (211) of the user profile (21).

3. Method according to one of the claims 1 or 2, **characterised in that** the user manages by himself at least in part the data stored in the data store (41), assigned to the user, of the content module (40).

4. Method according to one of the claims 1 to 3, **characterised in that** user-specific data about network characteristics (2113) and/or data about hardware characteristics (2114) of the communication device (10) of the user and/or data about the user behaviour (2112) are stored in the user profile (21).

5. Method according to one of the claims 1 to 4, **characterised in that** different user profiles (21) for different communication devices (10) of the user are stored assigned to the user and the data store (41) of the user, the data of the user profile being at least in part able to be determined by the user himself.

6. Method according to one of the claims 1 to 5, **characterised in that** the repackaging module (30) optimizes the selected multimedia data user-specifically taking into consideration the user data (211) in such a way that they are adapted to the requirements of the communication device (10) of the user and/or the communication connection from the central unit (20) to the said communication device.

7. Method according to one of the claims 1 to 6, **characterised in that** the user profile (21) comprises access conditions data, which determine a monetary value of a credit limit (2115) definable either by the user and/or the central unit (20), up to which credit limit (2115) an automatic billing of the obtained, content-oriented and user-specific optimised multimedia data takes place.

8. Method according to one of the claims 1 to 7, **characterised in that** data about user behaviour (2112) is captured automatically by the central unit (20) and is stored assigned to the user profile (21).

9. Method according to one of the claims 1 to 8, **characterised in that** the user profile (21) comprises reusable conditions data (2116) determinable by the user and/or the central unit (20), based upon which reusable conditions data (2116) the central unit (20) analyzes the user profile (21) and makes it accessible to third parties.

10. Method according to one of the claims 1 to 9, **characterised in that** prior to a delivery of content-oriented and user-specific optimised multimedia data, the user determines access request data (2111) for the user data (211), which access request data (2111) comprises an identification of the desired multimedia data (52) and/or user specific details about the transmission of the desired multimedia data (52).

## Revendications

1. Procédé pour le cumul et la transmission de données multimédia et de métadonnées, où les métadonnées (51) sont associées à des données multimédia (52), où un profil utilisateur (21) est établi à l'aide des informations utilisateur, des données multimédia (52) sont sélectionnées à l'aide des métadonnées associées (51) en se basant sur le profil utilisateur, et des données multimédia sont transmises par une unité centrale (20) à un dispositif de communication (10) d'un utilisateur, les métadonnées (51 ) étant générées au moins partiellement par une analyse automatique des données multimédia (52) en se basant sur le contenu des données multimédia (52),
Le profil d'utilisateur (21) étant généré au moins partiellement de manière dynamique, des parties de données du profil utilisateur (21) étant modifiables par l'utilisateur et le profil utilisateur étant associé en permanence à un utilisateur et mémorisé dans l'unité centrale (20), et
à partir des données multimédia sélectionnées (52), il est généré au moyen d'un module de repackaging (30) en tenant compte des données du profil utilisateur (21), des données multimédia optimisées axées sur le contenu et spécifiques à l'utilisateur, **caractérisé en ce que** des données multimédia optimisées axées sur le contenu et spécifiques à l'utilisateur sont mémorisées dans une mémoire de données permanente (41) d'un module de contenu (40) de l'unité centrale (20) et sont mises à disposition de l'utilisateur et **en ce que** des données multimédia optimisées axées sur le contenu et spécifiques à l'utilisateur sont modifiables par l'utilisateur.

2. Procédé selon la revendication 1, **caractérisé en ce que** les métadonnées (51) sont générés au moins partiellement dynamiquement, la génération dynamique s'effectuant au moins partiellement en se basant sur des données utilisateur (211) du profil utilisateur (21).

3. Procédé selon l'une des revendications 1 ou 2, **caractérisé en ce que** l'utilisateur administre lui-même du moins partiellement les données mémorisées dans la mémoire de données (41) du module de contenu (40) et associées à l'utilisateur.

4. Procédé selon l'une des revendications 1 à 3, **caractérisé en ce que** des données spécifiques à l'utilisateur pour des propriétés de réseaux (2113) et/ou des données pour des propriétés de matériel (2114) du dispositif de communication (10) de l'utilisateur et/ou des données relatives au comportement utilisateur (2112) sont stockées dans le profil utilisateur (21).

5. Procédé selon l'une des revendications 1 à 4, **caractérisé en ce que** l'utilisateur et la mémoire de données (41) de l'utilisateur sont associés à différents profils d'utilisateur (21) pour différents dispositifs de communication (10) de l'utilisateur, les données des profils utilisateurs étant déterminables du moins partiellement par l'utilisateur lui-même.

6. Procédé selon l'une des revendications 1 à 5, **caractérisé en ce que** le module de repackaging (30) optimise de manière spécifique à l'utilisateur les données multimédia sélectionnées en tenant compte des données utilisateur (211) de sorte qu'elles soient adaptées aux exigences du dispositif de communication (10) de l'utilisateur et/ou à la connexion de communication entre l'unité centrale (20) et ledit dispositif de communication.

7. Procédé selon l'une des revendications 1 à 6, **caractérisé en ce que** le profil utilisateur (21) comprend des données de conditions d'accès qui déterminent une valeur monétaire d'une limite de crédit (2115) définissable par l'utilisateur et/ou par l'unité centrale (20), limite de crédit (2115) jusqu'à laquelle une facturation automatique des données multimédia optimisées obtenues, axées sur le contenu et spécifiques à l'utilisateur s'effectue.

8. Procédé selon l'une des revendications 1 à 7, **caractérisé en ce que** des données de comportement utilisateur (2112) sont saisies automatiquement par l'unité centrale (20) et sont associées au profil utilisateur (21) et stockées.

9. Procédé selon l'une des revendications 1 à 8, **caractérisé en ce que** le profil d'utilisateur (21) comprend des données de conditions d'utilisation (2116) définissables par l'utilisateur et/ou par l'unité centrale (20), **en ce qu'**en se basant sur les données de conditions d'utilisation (2116) l'unité centrale (20) analyse le profil utilisateur (21) et le rend accessible à des tiers.

10. Procédé selon l'une des revendications 1 à 9, **caractérisé en ce que** l'utilisateur définit préalablement en fonction de données multimédia axées sur le contenu et spécifiques à l'utilisateur des données de requêtes d'accès (2111), des données utilisateur (211), lesquelles données de requêtes d'accès (2111) comprennent une identification des données multimédia souhaitées (52) et/ou des indications spécifiques à l'utilisateur pour la transmission des données multimédia requises (52).
